# FASCICULE DE BREVET EUROPEEN

(11) **EP 1 009 155 B1**
(45) Date de publication et mention de la délivrance du brevet: **20.08.2008**
(21) Numéro de dépôt: 99402739.9
(22) Date de dépôt: 04.11.1999
(51) Int. Cl.: H04M 15/00, H04Q 3/00

(54) **Architecture pour la gestion de la tarification dans un reseau de télécommunication**
Architektur für die Verwaltung der Vergebührung eines Telekommunikationsnetzwerkes
Architecture for billing management in a telecommunications network

(30) Priorité: 10.12.1998 FR 9815578
(43) Date de publication de la demande: 14.06.2000
(73) Titulaire: Alcatel Lucent, 75008 Paris (FR)
(72) Inventeur: Charton, Nathalie, 92120 Montrouge (FR)
(74) Mandataire: Nicolle, Olivier

(56) Documents cités:
- EP-A- 0 483 091
- EP-A- 0 876 047
- US-A- 5 784 442
- WANG-CHIEN LEE ET AL: "A framework for TMN-CORBA interoperability" PROCEEDINGS OF THE 1998 IEEE NETWORK OPERATIONS AND MANAGEMENT SYMPOSIUM, NOMS 98. CONFERENCE PROCEEDINGS (CAT. NO.98CH36158), 15 - 20 février 1998, pages 90-99 vol.1, XP000799764 New Orleans, US ISBN: 0-7803-4351-4

## Description

La présente invention concerne une architecture fournissant un service de tarification dans un système de gestion de réseaux de télécommunication.

L'invention est plus particulièrement susceptible de s'appliquer aux Réseaux de Gestion des Télécommunications (RGT), ainsi que définis dans la série de recommandations M.3000, émanant de l'ITU-T (*International Telecommunication Union - Telecommunication Standardization Section).*

La tarification est une des 5 grandes familles de services de gestion de l'architecture OSI (*Open System Interaction*), définie conjointement par l'ISO (*International Standardization Organization*) et l'ITU-T.

Ces grandes familles, appelées aires fonctionnelles dans le vocabulaire propre à l'architecture OSI sont les suivantes :
- La gestion des fautes,
- La gestion de la tarification,
- La gestion de la configuration,
- La gestion de la performance et
- La gestion de la sécurité.

Le service de gestion de la tarification est plus particulièrement décrit par la recommandation X.742 de l'ITU-T intitulée « *Information technology* - *Open Systems Interconnection - Systems management: Usage metering function for accounting purposes* ».

Cette recommandation ne spécifie que des composants bas niveaux et aucunement une façon de les agencer pour former un service de tarification.

Dans un réseau de télécommunication, lors de la terminaison d'une communication, le commutateur de l'appelant transmet à un centre de facturation, un ticket de facturation contenant les informations sur la communication qui sont nécessaires au centre de facturation (durée de l'appel, zone de tarification etc.)

Dans un réseau intelligent conforme aux recommandations de la série Q.1200 de l'ITU-T, les services émettent un équivalent des tickets de facturation.

On voit que les solutions existantes sont dépendantes de l'architecture du réseau de télécommunication, et notamment des tickets de facturation émis par les commutateurs ou par les services du réseau intelligent.

Des exemples semblables de l'art antérieur sont décrits dans les documents EP 0483091 et US 578442.

Le but de la présente invention est de fournir un moyen pour permettre la mise en oeuvre de politiques de tarification, de façon indépendante du réseau de télécommunication sous-jacent et des services qui utilisent ce réseau.

Pour atteindre ce but, l'invention a pour objet une architecture comportant un réseau de télécommunication formé d'une pluralité d'éléments structurée hiérarchiquement, et un moyen de gestion contenant un ensemble hiérarchique de composants logiciels.
- chaque composant logiciel est associé à un élément du réseau de télécommunication, et chaque niveau hiérarchique de cet ensemble correspond à un niveau hiérarchique du réseau de télécommunication,
- au moins un des composants logiciels comporte un moyen d'émission de messages à destination d'au moins un moyen de tarification, et,
- seuls les composants logiciels de plus bas niveau disposent de moyens pour accéder à des informations relatives à l'utilisation des éléments de réseau associés, contenues dans ces éléments de réseau.

Selon des mises en oeuvre particulières de l'invention, celle-ci peut en outre comporter une ou plusieurs des caractéristiques suivantes :
- Les messages sont des notifications transmises vers le ou les moyens de tarification, via un ou plusieurs services de notification.
- Les notifications et le ou les services de notification sont supportés par une architecture logicielle de type CORBA.
- Le ou les moyens de tarification transmettent à certains des composants logiciels un contrat (ou *policy,* suivant la terminologie anglaise) paramétrant les moyens d'émission de messages.
- Les informations relatives à une communication sont transmises à la fin de la communication, dans un ou plusieurs messages.
- Les informations relatives à une communication sont transmises périodiquement, dans un ou plusieurs messages.
- Le moyen de gestion comporte en outre des moyens pour établir et interrompre des communications dans le réseau de télécommunication, par exemple conformément aux spécifications du consortium TINA.

Ainsi, en utilisant une architecture conforme à l'invention, la tarification devient indépendante du réseau de télécommunication sous-jacent. Cela implique deux avantages distincts :
- D'une part, les informations émises par les composants de l'architecture selon l'invention étant génériques, c'est-à-dire indépendantes des ressources du réseau sous-jacent, cela signifie que la tarification n'est plus liée aux informations spécifiques contenues dans les tickets de facturation délivrés par les ressources d'un réseau particulier.
- Et d'autre part, cela signifie que le changement d'une ressource du réseau (un commutateur par exemple) ne modifie en rien la politique de tarification qui a été mise en place.

De la même façon, les informations émises par les composants de l'architecture selon l'invention étant génériques, c'est-à-dire identiques pour tous ses services supportés, toute politique de tarification peut être mise en oeuvre, et ne dépend plus exclusivement des informations spécifiques contenues dans les tickets émanant du réseau ou des services particuliers.

Un autre avantage encore est de permettre des facturations en utilisant plusieurs niveaux d'information. Il est par exemple possible d'établir des factures dépendant de l'utilisation réelle des commutateurs utilisés ou bien du nombre de sous-réseaux utilisés etc.

D'autres avantages et caractéristiques de l'invention apparaîtront dans la description détaillée de différents modes de réalisation qui va être faite en relation avec les figures jointes.

La figure 1 illustre schématiquement l'architecture pour la gestion de la tarification selon l'invention.

Les figures 2a et 2b représentent deux modes de réalisation particuliers de cette architecture.

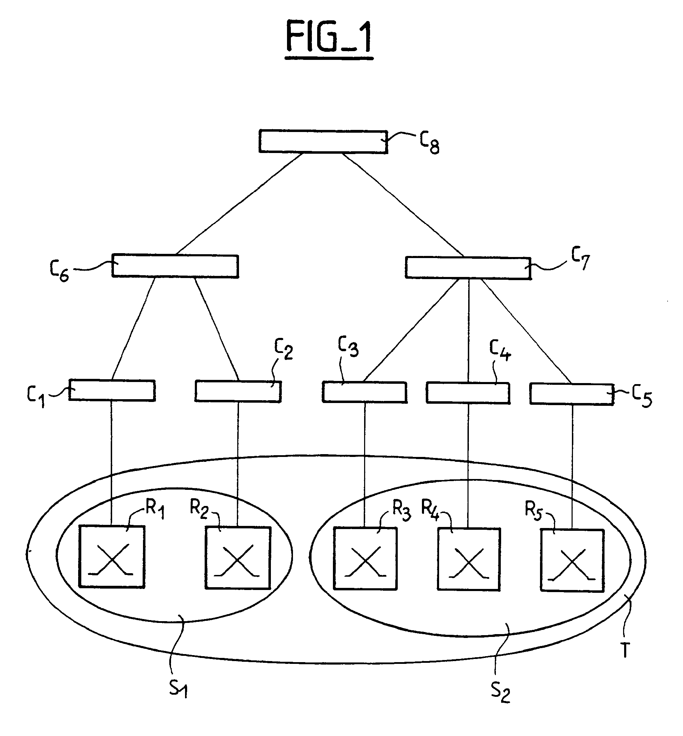

Le réseau de télécommunication T représenté à la figure 1 comporte 3 niveaux hiérarchiques. Le premier niveau est formé par le réseau de télécommunication lui-même. Ce réseau est divisé en plusieurs sous-réseaux S₁, S₂ comportant chacun une ou plusieurs ressources de réseau, R₁, R₂, R₃, R₄, R₅. Le réseau de télécommunication T, les sous-réseaux S₁, S₂ et les ressources de réseau, R₁, R₂, R₃, R₄, R₅, sont appelés éléments de réseau.

Chacun de ces éléments de réseau est associé à un composant logiciel de l'architecture structurée selon l'invention.

Les ressources du réseau R₁, R₂, R₃, R₄, R₅, sont associées avec les composants logiciels de plus bas niveaux, respectivement C₁, C₂, C₃, C₄, C₅. Les sous-réseaux S₁ et S₂ sont, quant-à-eux, associés aux composants logiciels du niveau hiérarchique intermédiaire C₆ et C₇. Enfin, le réseau lui-même est associé au composant logiciel de plus haut niveau C₈.

Chacun de ces composants logiciels peut comporter un moyen d'émission de messages à destination d'un moyen de tarification. Les messages provenant d'un composant logiciel donné comportent des informations relatives à l'utilisation de l'élément de réseau auquel il est associé.

Par ailleurs, les composant logiciels de plus bas niveau peuvent communiquer avec des interfaces d'accès aux ressources du réseau afin d'obtenir des informations relatives à l'utilisation des celles-ci. Ces informations peuvent être stockées dans des bases de données appelées MIB (pour *Management Information Base,* en anglais). Les composants logiciels de plus bas niveau peuvent accéder à ces MIB via ces interfaces d'accès en utilisant un protocole de communication tel que CMIP (*Common Management Information Protocol*) qui est spécifié par la recommandation X.710 de l'ITU-T, ou SNMP *(Simple Network Management Protocol).*

Les composants logiciels de plus bas niveau peuvent ainsi accéder à des informations précises relatives aux ressources du réseau. Ces informations peuvent être :
- l'utilisation réelle des ressources, c'est à dire le débit ou, par exemple, le nombre de cellules qui transitent, pour une communication donnée, sur un commutateur,
- un taux d'erreurs, par exemple, le nombre de cellules erronées qui n'ont pu être transmises.

Ces informations peuvent ensuite être remontées vers les composants logiciels de plus hauts niveaux pour y être agrégées.

Selon une mise en oeuvre particulière, la hiérarchie de composants logiciels est confondue avec un gestionnaire de connexion, notamment avec un gestionnaire de connexion conforme aux spécifications issues du consortium TINA (*Telecommunication Information Networking Architecture*). Selon ces spécifications, l'initialisation d'une communication dans le réseau de télécommunication passe par le gestionnaire de connexion.

La requête d'initialisation est envoyée au composant logiciel de plus haut niveau, puis propagée à travers la hiérarchie de composants logiciels.

Par exemple, en reprenant l'exemple illustré par la figure 1, si la communication nécessite de connecter les ressources R₁ et R₄, alors le composant logiciel de plus haut niveau, C₈, va propager la requête vers les deux composants logiciels de niveau immédiatement inférieur qui possèdent dans leur descendance les composants logiciels associés à ces ressources, c'est à dire les composants logiciels C₆ et C₇. Chacun de ces composants logiciels propage alors la requête vers les composants logiciels associés aux ressources permettant de connecter les ressources demandées, c'est-à-dire C₁, C₂, C₃ et C₄.

Les composants logiciels C₁, C₂, C₃ et C₄ qui sont à même de communiquer avec les ressources R₁, R₂, R₃ et R₄, peuvent alors configurer ces ressources pour permettre l'établissement de la connexion, et donc, de la communication.

Grâce à ce mécanisme, les différents composants logiciels possèdent les informations relatives aux communications qui sont en cours sur le réseau de télécommunication.

Selon une mise en oeuvre particulière de l'invention, le ou les moyens de tarification transmettent à certains composants logiciels élémentaires un contrat, ou *policy* selon la terminologie de langue anglaise, permettant de paramétrer les moyens d'émission de messages.

Notamment, on peut ainsi paramétrer :
- Les informations, parmi les informations génériques disponibles, qui seront émises par ces moyens, vers le ou les moyens de tarification,
- Le moment auquel ces informations seront transmises. Les informations peuvent être transmises par exemple à la clôture de la communication ou bien sur une base périodique (une fois par jour, une fois par mois...).

Selon une mise en oeuvre particulière de l'invention, les messages émis par les composants logiciels sont des notifications, c'est-à-dire des messages envoyés sur une base asynchrone. Ces notifications sont envoyées à un ou plusieurs services de notification auxquels le ou les moyens de tarification s'enregistrent. De cette façon, un moyen de tarification s'étant enregistré auprès d'un service de notification, reçoit les notifications issues des composants logiciels.

L'architecture selon l'invention peut être mise en oeuvre au dessus d'une plate-forme CORBA (*Common Object Request Broker Architecture),* conforme aux spécifications issues de l'OMG (*Open Management Group).* Dans ce cas, le service de notification peut être un service de notification conforme à ces spécifications.

D'autres mises en oeuvre, notamment n'utilisant pas de notifications, sont possibles. Par exemple, les messages peuvent être des réponses à des requêtes provenant du ou des moyens de tarification.

À partir de ces informations, les moyens de tarification peuvent élaborer des factures. Ces factures dépendent de la nature des informations reçues.

La relation de dépendance peut être extrêmement simple : la facture pour une communication peut être le produit d'un coût forfaitaire de tarification et de l'utilisation réelle des ressources utilisées.

D'autres solutions sont bien évidemment envisageables. Notamment,
- Il est possible de prendre en compte un taux d'erreur et/ou une qualité de service mesuré au niveau des ressources du réseau, afin d'appliquer une tarification dégressive en cas de mauvaise qualité de la communication, ou de ne pas facturer les cellules non transmises.
- Il est possible d'appliquer une tarification différente pour certains sous-réseaux.
- Il est possible de faire varier la tarification en fonction des heures de la journée.

Cette liste est bien sûr loin d'être exhaustive.

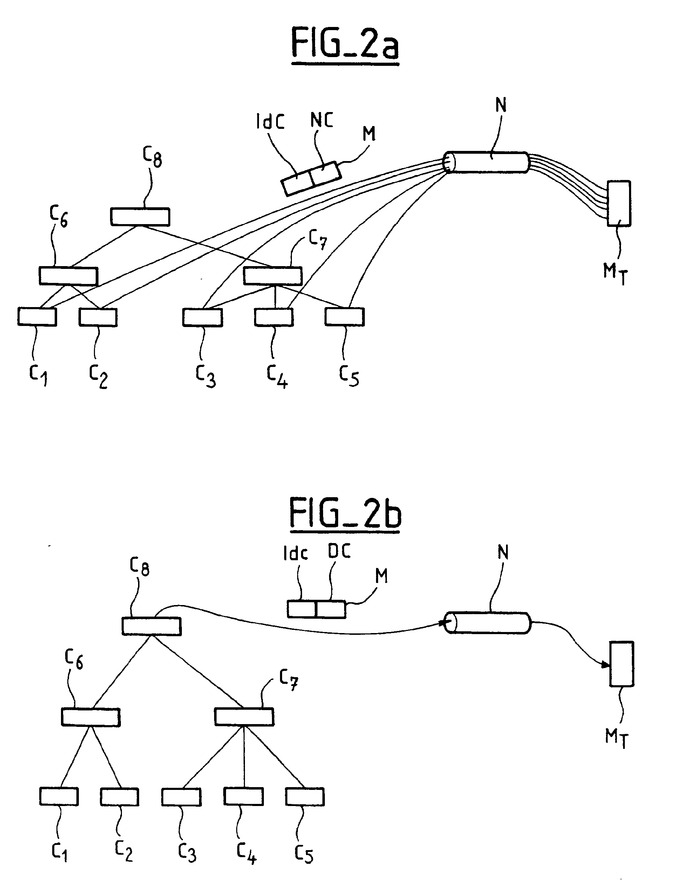

La figure 2a illustre un mode de réalisation particulier de l'invention. Dans cet exemple, le moyen de tarification est unique. Un contrat est envoyé vers les composants logiciels indiquant que seuls les composants logiciels de plus bas niveau (C₁, C₂, C₃, C₄ et C₅) émettent des messages M.

Ces messages M contiennent un identificateur de la communication, IdC, et le nombre NC de cellules ayant transité par le commutateur pour cette communication.

Ces messages sont envoyés lors de la fermeture de la communication à un service de notification N.

À la réception de ces messages, le moyen de tarification T agrège les informations reçues des différents composants logiciels correspondant aux différentes ressources de réseau utilisées par la communication.

La figure 2b illustre un second mode de réalisation de l'invention.

Un contrat est envoyé vers les composants logiciels indique que seul le composant logiciel de plus haut niveau, C₈, doit émettre des messages M.

Ces messages M contiennent un identificateur de la communication IdC et la durée DC de la communication correspondante. Ils sont envoyés sur une base périodique (par exemple, à la fin de chaque mois) au moyen de tarification T.

## Revendications

1. Architecture pour la gestion de la tarification de télécommunications, comportant un réseau de télécommunication (CT) formé d'une pluralité d'éléments structurée hiérarchiquement, et un moyen de gestion contenant un ensemble hiérarchique de composants logiciels,
chaque composant logiciel (C₁,C₂,C₃,C₄,C₅,C₆,C₇,C₈) étant associé à un élément (R₁,R₂,R₃,R₄,R₅,S₁,S₃T) dudit réseau de télécommunication, et chaque niveau hiérarchique dudit ensemble correspondant à un niveau hiérarchique dudit réseau de télécommunication,
au moins un desdits composants logiciels comportant un moyen d'émission de messages (M) à destination d'au moins un moyen de tarification (MT) et
seuls les composants logiciels de plus bas niveau (C₁,C₂,C₃,C₄,C₅) disposant de moyens pour accéder à des informations relatives à l'utilisation des éléments de réseau associés (R₁,R₂,R₃,R₄,R₅), contenues dans lesdits éléments de réseau.

2. Architecture selon la revendication précédente, **caractérisée en ce que** lesdits messages sont des notifications qui sont transmises vers ledit au moins un moyen de facturation par un ou plusieurs services de notification.

3. Architecture selon la revendication précédente, **caractérisée en ce que** lesdites notifications et ledit ou lesdits services de notification sont supportés par une architecture logicielle de type CORBA.

4. Architecture selon l'une des revendications précédentes, **caractérisée en ce que** ledit au moins un moyen de tarification transmet à certains desdits composants logiciels un contrat paramétrant ledit au moins un moyen d'émission de messages.

5. Architecture selon l'une des revendications précédentes, **caractérisée en ce que** les informations relatives à une communication sont transmises à la fin de ladite communication, dans un ou plusieurs desdits messages.

6. Architecture selon l'une des revendications 1 à 4, **caractérisée en ce que** les informations relatives à une communication sont transmises périodiquement, dans un ou plusieurs desdits messages.

7. Architecture selon l'une quelconque des revendications précédentes, **caractérisée en ce que** ledit moyen de gestion comporte en outre des moyens pour établir et interrompre des communications au sein dudit réseau de télécommunication.

## Claims

1. An architecture for managing the billing of telecommunications, said architecture comprising a telecommunication network (T) made up of a plurality of elements hierarchically structured, and management means containing a hierarchical set of software components, in which:
- each software component (C1, C2, C3, C4, C5, C6, C7, C8) is associated with an element (N1, N2, N3, N4, N5, N6, N7, N8) of said telecommunication network, and each hierarchical level of said set corresponding to a hierarchical level of said telecommunication network,
- at least one of said software components comprises a means for sending messages (M) to at least one billing means (BM), and
- only the lowest-level software components (C1, C2, C3, C4, C5) have means for accessing information related to the use of the associated network elements (N1, N2, N3, N4, N5), said information being contained within said network elements.

2. An architecture according to claim 1, **characterized in that** said messages are notifications that are transmitted to said at least one billing means by one or more notification services.

3. An architecture according to claim 2, **characterized in that** said notifications and said notification service(s) are supported by a COBRA software architecture.

4. An architecture according to any preceding claim, **characterized in that** said at least one billing means transmits to some of said software components a contract setting parameters for said at least one means of sending messages.

5. An architecture according to any preceding claim, **characterized in that** the communication-related information is transmitted at the end of said communication, within one or more of said messages.

6. An architecture according to any one of the claims 1 to 4, **characterized in that** the communication-related information is transmitted periodically, within one or more of said messages.

7. An architecture according to any preceding claim, in which said management means further comprise means for establishing and interrupting communications within said telecommunication network.

## Patentansprüche

1. Architektur für die Verwaltung der Gebührenberechnung von Telekommunikationsverbindungen, welche ein aus einer hierarchisch strukturierten Vielzahl von Elementen bestehendes Telekommunikationsnetzwerk (T) und ein Mittel für die Verwaltung, welches eine hierarchische Gruppe von Software-Komponenten enthält, umfasst,
wobei jede Software-Komponente (C₁, C₂, C₃, C₄, C₅, C₆, C₇, C₈) einem Element (R₁, R₂, R₃, R₄, R₅, S₁, S₂,T) des besagten Telekommunikationsnetzwerks zugeordnet ist und jede hierarchische Ebene der besagten Gruppe einer hierarchischen Ebene des besagten Telekommunikationsnetzwerks entspricht,
wobei eine der besagten Software-Komponenten ein Mittel zum Senden von Nachrichten (M) an mindestens ein Mittel für die Gebührenberechnung (MT) umfasst, und
nur die Software-Komponenten der untersten Ebene (C₁, C₂, C₃, C₄, C₅) über Mittel zum Zugriff auf die Information, welche die Verwendung der damit verbundenen Netzwerkelemente betreffen und in den besagten Netzwerkelementen (R₁, R₂, R₃, R₄, R₅), enthalten sind, verfügt.

2. Architektur nach dem vorstehenden Anspruch, **dadurch gekennzeichnet, dass** die besagten Nachrichten Benachrichtigungen sind, welche von einem oder mehreren Benachrichtigungsdiensten an das besagte mindestens eine Mittel zur Rechnungsstellung übertragen werden.

3. Architektur nach dem vorstehenden Anspruch, **dadurch gekennzeichnet, dass** die besagten Benachrichtigungen und der besagte oder die besagten Benachrichtigungsdienste von einer Software-Architektur vom Typ CORBA unterstützt werden.

4. Architektur nach einem der vorstehenden Ansprüche, **dadurch gekennzeichnet, dass** das besagte mindestens eine Mittel für die Gebührenberechnung an bestimmte der besagten Software-Komponenten eine Policy sendet, welche das besagte mindestens eine Mittel zum Senden von Nachrichten parametriert.

5. Architektur nach einem der vorstehenden Ansprüche, **dadurch gekennzeichnet, dass** die eine Verbindung betreffenden Informationen nach Beendigung der Verbindung in einer oder mehreren der besagten Nachrichten übermittelt werden.

6. Architektur nach einem der Ansprüche 1 bis 4, **dadurch gekennzeichnet, dass** die eine Verbindung betreffenden Informationen periodisch in einer oder mehreren der besagten Nachrichten übermittelt werden.

7. Architektur nach einem beliebigen der vorstehenden Ansprüche, **dadurch gekennzeichnet, dass** das besagte Mittel für die Verwaltung weiterhin Mittel zum Aufbau und zur Unterbrechung der Verbindungen innerhalb des besagten Telekommunikationsnetzwerks umfasst.
